Europäisches Patentamt

European Patent Office

Office européen des brevets

(19)

(11) Numéro de publication : **0 134 918**
**B1**

(12) **FASCICULE DE BREVET EUROPÉEN**

(45) Date de publication du fascicule du brevet :
30.07.86

(21) Numéro de dépôt : 84106736.6

(22) Date de dépôt : 13.06.84

(51) Int. Cl.⁴ : **B 65 D 90/66, C 21 B 7/20**

(54) **Mécanisme pour actionner un clapet de dosage.**

(30) Priorité : 29.06.83 LU 84890

(43) Date de publication de la demande :
27.03.85 Bulletin 85/13

(45) Mention de la délivrance du brevet :
30.07.86 Bulletin 86/31

(84) Etats contractants désignés :
AT BE DE FR GB IT NL SE

(56) Documents cités :
EP-A- 0 062 770
DE-A- 2 646 618
DE-C- 919 638
FR-A- 457 067
US-A- 2 934 304

(73) Titulaire : PAUL WURTH S.A.
32 rue d'Alsace
L-1122 Luxembourg (LU)

(72) Inventeur : Lonardi, Emile
30 rue Schouweiler
Bascharage (LU)
Inventeur : Kremer, Victor
95 rue de l'Egalité
Luxembourg (LU)

(74) Mandataire : Meyers, Ernest et al
Office de Brevets Freylinger & Associés 46 rue du
Cimetière B.P. 1153
L-1011 Luxembourg (LU)

EP 0 134 918 B1

Jouve, 18, rue St-Denis, 75001 Paris, France

## Description

La présente invention concerne un mécanisme pour actionner un clapet de dosage constitué de deux registres rotatifs en forme de calotte sphérique ou cylindrique pourvus de découpes symétriques par rapport à l'axe d'une ouverture centrale définie par le mouvement des registres et de leur découpe, ces registres étant solidaires de deux arbres d'entraînement disposés l'un coaxialement par rapport à l'autre et logés dans des paliers d'un châssis pour actionner, par pivotement autour de leur axe commun, chacun des registres en sens opposés.

Un tel clapet de dosage est décrit dans la demande de brevet EP-A-0 062 770 pour régler l'écoulement de la matière de chargement hors d'une enceinte de stockage disposée dans l'axe central d'une installation de chargement d'un four à cuve. Ce clapet a été spécialement conçu pour une telle installation d'alimentation centrale afin d'assurer un écoulement central symétrique autour de l'axe de l'enceinte et de l'ouverture définie par la position des deux registres constituant le clapet. Cette demande de brevet propose également deux modes de réalisation d'un mécanisme pour actionner ce clapet, c'est-à-dire pour faire pivoter les deux registres en sens opposés et en synchronisme entre une position ouverte et une position fermée.

Le but de la présente invention est de proposer un nouveau mécanisme pour actionner un tel clapet de dosage, qui est particulièrement simple, compact et économique.

Pour atteindre cet objectif, l'invention propose un mécanisme pour actionner un clapet de dosage du genre décrit dans le préambule, qui est essentiellement caractérisé en ce que chacun des deux arbres est pourvu d'un bras, articulés chacun, par l'intermédiaire d'une bielle, sur un levier culbuteur, montés sur un axe de pivotement parallèle à l'axe commun des deux arbres, ces leviers culbuteurs étant reliés à un dispositif d'entraînement pour les faire pivoter autour de leur axe de pivotement et en ce que l'articulation entre l'un des leviers culbuteurs et sa bielle est décalée angulairement autour dudit axe de pivotement par rapport à l'articulation entre l'autre levier culbuteur et sa bielle.

Dans un mode de réalisation avantageux, l'un des leviers culbuteurs est constitué d'une barre sensiblement droite, tandis que l'autre levier culbuteur est une barre en forme de coude monté par son angle sur ledit axe de pivotement.

D'autres particularités et caractéristiques ressortiront de la description détaillée d'un mode de réalisation avantageux présenté ci-dessous à titre d'illustration, en référence aux dessins annexés, dans lesquels :

La figure 1 montre une vue, partiellement en coupe, du mécanisme suivant le plan de coupe I-I de la figure 2,

La figure 2 montre une vue latérale dans la direction de l'axe 0, du mécanisme en position fermée du clapet,

La figure 3 montre une vue analogue à celle de la figure 2 lorsque le clapet est en position ouverte,

La figure 4 montre une vue en perspective du mécanisme dans la position de la figure 2 et

La figure 5 montre une vue en perspective du même mécanisme dans la position selon la figure 3.

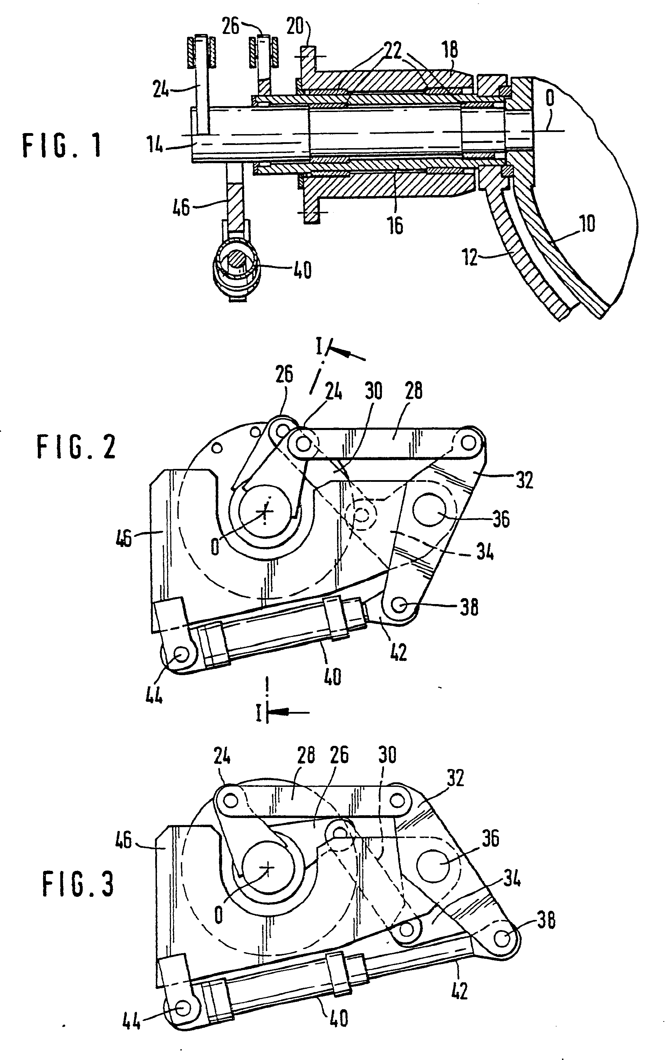

La figure 1 montre une partie des deux registres 10 et 12 en forme de calotte sphérique ou cylindrique qui sont identiques à ceux décrits dans la demande de brevet EP-A-0 062 770. Par conséquent, on se référera à cette publication pour des explications supplémentaires concernant le fonctionnement et le montage de ce clapet.

Comme dans cette demande de brevet le registre supérieur 10 est solidaire d'un arbre d'entraînement 14 disposé coaxialement à l'intérieur d'un deuxième arbre d'entraînement 16 dont le registre inférieur 12 est solidaire. Ces deux arbres 14 et 16 sont portés dans le palier 18 d'un châssis fixe 20. Les deux arbres 14 et 16 peuvent tourner l'un par rapport à l'autre autour de leur axe commun 0 et par rapport au châssis 20, grâce à l'interposition de fourreaux 22.

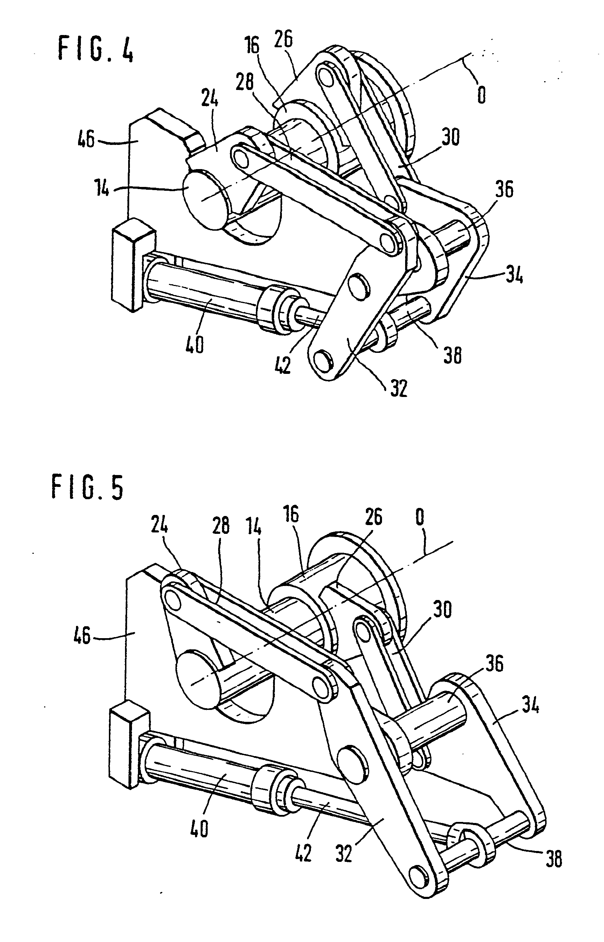

Comme dans la demande de brevet connue, le mécanisme pour actionner les bras d'entraînement 14 et 16 autour de leur axe commun, afin d'ouvrir et de fermer les deux registres 10 et 12, doit être conçu de manière à actionner ces bras d'entraînement 14 et 16 en synchronisme et en sens opposés. Ce mécanisme proposé par la présente invention sera décrit ci-dessous en se référant plus particulièrement aux figures 2 et 3, ainsi qu'aux vues correspondantes en perspective selon les figures 4 et 5.

Les deux arbres 14 et 16 sont respectivement solidaires d'un bras 24 et 26 qui sont articulés chacun à l'une des extrémités d'une bielle 28 et 30. Les extrémités opposées de ces deux bielles 28 et 30 sont articulées, à leur tour, respectivement sur l'une des extrémités de deux leviers culbuteurs 32 et 34 montés sur un axe commun 36 parallèle à l'axe 0 des deux arbres d'entraînement 14 et 16 et susceptibles de pivoter autour de cet axe commun 36. Ces deux leviers culbuteurs 32 et 34 sont reliés ensemble, par leurs extrémités opposées, au moyen d'une tige 38, de sorte que ces deux leviers 32 et 34 doivent forcément pivoter ensemble autour de l'axe 36. Pour augmenter la solidité, il est préférable de souder les leviers 32 et 34 ensemble au moyen d'entretoises non montrées.

Le pivotement des leviers culbuteurs 32 et 34 est engendré par un vérin hydraulique 40 qui est monté de façon pivotante sur un pivot 44 porté par une plaque de support 46 solidaire du châssis 20. L'extrémité de la tige 42 du vérin 40 est traversée par la tige 38 qui relie les deux leviers 32 et 34. Il est bien entendu possible de remplacer le vérin 40 par un autre moteur approprié.

Comme le montrent les figures 4 et 5, les bielles 28 et 30 sont, dans l'exemple représenté, des éléments doubles. Il est bien entendu également possible de prévoir des éléments simples avec des extrémités en fourche, ou bien de concevoir les leviers 32, 34 ou les bras 24 et 26 sous forme d'éléments doubles, ceci suivant les possibilités de montage.

Dans le même ordre d'idées, il est possible de réunir en une seule pièce les leviers culbuteurs 32 et 34 qu'il faudrait alors munir de fourches pour le raccord des bielles 28 et 30. Dans ce cas, il faudrait également doubler la plaque de support 46.

Au lieu de prévoir le vérin 40 selon la disposition des figures, il est possible, suivant la place disponible, de le prévoir du côté opposé par rapport aux arbres 14, 16 et de modifier les leviers 32, 36 en conséquence.

L'une des particularités essentielles est que les leviers culbuteurs 32 et 34 sont conçus de telle manière que leurs articulations respectives avec les bielles 28 et 30 évoluent lors du pivotement de ces leviers 32 et 34, de part et d'autre d'un plan défini par l'axe 0 et l'axe commun 36 (voir notamment figure 3). A cet effet, l'un des leviers culbuteurs 32 est constitué d'une barre sensiblement droite dont la région centrale est montée sur l'axe 36. L'autre levier 34, par contre, est en forme de coude dont l'angle est monté sur l'axe 36 (voir figures 4 et 5).

Grâce à ces dispositions et forme des leviers culbuteurs 32 et 34, les registres 10 et 12 sont actionnés en sens opposés lors de la manœuvre du vérin 40. En effet, en actionnant celui-ci à partir de la position de la figure 2 pour ouvrir les registres, on voit que le bras 24 actionnant le registre supérieur 10 est pivoté dans le sens trigonométrique, alors que le bras 26 actionnant le registre inférieur 12 est pivoté dans le sens des aiguilles d'une montre.

La coordination des mouvements des deux registres 10 et 12, afin que l'ouverture définie par la position de ceux-ci soit toujours symétrique par rapport à un point central, est réalisée par le choix des rapports de transmission et des leviers, notamment la longueur des bras 24 et 26, la longueur des leviers culbuteurs 32 et 34, la distance entre l'axe 36 et l'axe 0, ainsi que les angles de départ d'une part, entre le bras 26 et le plan défini par les axes 0 et 36, et d'autre part, le bras de levier 34 autour de l'axe 36 et le plan précité, dans les positions de la figure 2. Ainsi, par exemple, étant donné que le rayon du registre inférieur 12 est différent de celui du registre supérieur 10, il est nécessaire de modifier légèrement l'amplitude de pivotement de celui-ci, afin de ne pas obtenir une ouverture devenant de plus en plus disymétrique. Ceci est réalisable par un calcul approprié des longueurs des rapports précités.

On voit que le mécanisme proposé ci-dessus permet d'atteindre le but visé par le fait qu'il ne nécessite plus d'engrenage ou crémaillère et plus de glissière, ce qui réduit en plus les besoins d'entretien.

## Revendications

1. Mécanisme pour actionner un clapet de dosage constitué de deux registres rotatifs (10, 12) en forme de calotte sphérique ou cylindrique pourvus de découpes symétriques par rapport à l'axe d'une ouverture centrale définie par le mouvement des registres et de leur découpe, ces registres étant solidaires de deux arbres d'entraînement (14, 16) disposés l'un coaxialement par rapport à l'autre et logés dans des paliers d'un châssis (20) pour actionner, par pivotement autour de leur axe commun (0), chacun des registres en synchronisme et en sens opposés, caractérisé en ce que chacun des deux arbres (14), (16) est pourvu d'un bras (24), (26), articulés chacun, par l'intermédiaire d'une bielle (28), (30), sur un levier culbuteur (32), (34), montés sur un axe de pivotement (36) parallèle à l'axe commun (0) des deux arbres (14), (16), ces leviers culbuteurs (32), (34) étant reliés à un dispositif d'entraînement pour les faire pivoter autour de leur axe de pivotement (36) et en ce que l'articulation entre l'un des leviers culbuteurs (34) et sa bielle (30) est décalée angulairement autour dudit axe de pivotement (36) par rapport à l'articulation entre l'autre levier culbuteur (32) et sa bielle (28).

2. Mécanisme selon la revendication 1, caractérisé en ce que l'un des leviers culbuteurs (32) est constitué d'une barre sensiblement droite, tandis que l'autre levier culbuteur (34) est une barre en forme de coude monté par son angle sur ledit axe de pivotement (36).

3. Mécanisme selon la revendication 1, caractérisé en ce que le dispositif d'entraînement est constitué par un vérin hydraulique (40) monté de façon pivotante sur le châssis.

## Claims

1. Mechanism for actuating a dosing valve, consisting of two rotary registers (10, 12) of the shape of a spherical or cylindrical cap having cut-out portions symmetrical in relation to the axis of a central opening defined by the movement of the registers and of their cut-out parts, these registers being integral with two driving shafts (14, 16) positioned coaxially in respect of each other and mounted in the bearings of a frame (20) in such a way that by pivoting about their common axis (0) they will cause the registers to move in opposite directions, characterized in that each of the two shafts (14, 16) is provided with an arm (24), (26) each arm being jointed via a connecting rod (28), (30) to a tilting lever (32), (34), mounted on pivot shaft (36) parallel to the common axis (0) of the two shafts (14, 16) the said tilting levers being connected to a driving device serving to pivot them about their pivot shaft (36) and in that the articulation between one of the tilting levers (34) and its connecting rod (30) is situated at a different angle around the said pivot shaft (36) with respect to the articulation between the other tilting lever (32) and the connecting rod (28) of this latter.

2. Mechanism in accordance with claim 1, characterized in that one of the tilting levers (32) consists of a substantially straight bar while the other tilting lever (34) is a bent bar mounted by its bend on the aforementioned pivot shaft (36).

3. Mechanism in accordance with claim 1, characterized in that the driving device consists of a hydraulic jack (40) pivotably mounted on the frame.

**Patentansprüche**

1. Mechanismus zum Betätigen einer Dosierungsklappe bestehend aus zwei rotierenden kugel- oder zylinderförmigen Schiebern (10, 12) mit Ausschnitten, die symmetrisch um die Achse einer zentralen Öffnung liegen, welche durch die Bewegung der Schieber und ihrer Ausschnitte definiert wird, wobei die Schieber mit zwei koaxial zueinander angeordneten Getriebewellen (14, 16) verbunden sind, die in einem Lager eines Gestells (20) gelagert sind, um, durch Drehung um ihre gemeinsame Achse (0), jeden der Schieber synchron und in entgegengesetzter Richtung zu betätigen, dadurch gekennzeichnet, dass jede der zwei Wellen (14), (16) einen Arm (24), (26) hat welcher mittels eines Pleuels (28), (30) auf einem Kipphebel (32), (34) schwenkbar ist, welcher auf einer Schwenkachse (36) montiert ist, die parallel zur gemeinsamen Achse (0) der beiden Wellen (14), (16) ist, dass diese Kipphebel (32), (34) mit einer um ihre Schwenkachse (36) schwenkbaren Getriebevorrichtung verbunden sind, und dadurch, dass das Gelenk zwischen einem der Kipphebel (34) und seinem Pleuel (30) winkelig um besagte Schwenkachse (36) in Bezug auf das Gelenk zwischen dem anderen Kipphebel (32) und seinem Pleuel (28).

2. Mechanismus gemäss Anspruch 1, dadurch gekennzeichnet, dass einer der Kipphebel (32) aus einer annähernd geraden Stange besteht, während der andere Kipphebel (34) eine knieförmige Stange ist, die mit ihrem Winkel auf besagte Schwenkachse (36) montiert ist.

3. Mechanismus gemäss Anspruch 1, dadurch gekennzeichnet, dass die Getriebevorrichtung aus einem Hydraulikzylinder (40) besteht, der schwenkbar auf dem Gestell montiert ist.

FIG. 1

FIG. 2

FIG. 3

FIG. 4

FIG. 5